# FASCICULE DE BREVET EUROPEEN

(11) **EP 1 825 154 B1**
(45) Date de publication et mention de la délivrance du brevet: **13.01.2010**
(21) Numéro de dépôt: 05825962.3
(22) Date de dépôt: 14.12.2005
(51) Int. Cl.: F16B 39/10

(54) **DISPOSITIF DE FIXATION D'UN ELEMENT SUR UN SUPPORT**
VORRICHTUNG ZUR BEFESTIGUNG EINES ELEMENTS AN EINER STÜTZE
DEVICE FOR FIXING AN ELEMENT ON A SUPPORT

(30) Priorité: 14.12.2004 FR 0413273
(43) Date de publication de la demande: 29.08.2007
(73) Titulaire: VALEO SYSTEMES THERMIQUES, 78321 Le Mesnil St Denis Cedex (FR)
(72) Inventeur: GUYOMARD, Jean-Nicolas, F-27930 Le Mesnil Fuguet (FR)
(86) Numéro de dépôt international: PCT/FR2005/003126
(87) Numéro de publication internationale: WO 2006/064122

(56) Documents cités:
- FR-A- 1 300 835
- US-A- 2 102 495
- US-A- 2 675 844

## Description

L'invention concerne un dispositif de fixation d'un élément sur un support, selon le préambule de la revendication 1. Un tel dispostif est connu du document US 2,675, 844 A.

L'invention trouve notamment son application dans la fixation des projecteurs d'un véhicule sur une face avant. Une face avant est un élément de structure susceptible d'intégrer divers équipements d'un véhicule, tels que projecteurs, clignotants, avertisseurs sonores, échangeur thermique, groupe moto-ventitateurou module de refroidissement complet, etc.

Le module, ainsi pourvu de ses équipements, constitué un élément unitaire préparé et livré par l'équipementier, prêt à être monté sur le véhicule par le constructeur. Le montage de ce module unitaire se fait par raccordement à des éléments de structure latéraux du véhicule, tels que les longerons, ailes ou coques, puis mise en place d'un pare-choc ou bouclier frontal rapporté sur le module.

Le montage des projecteurs sur une face avant est un processus généralement long et coûteux. La fixation est en général assurée par des vis auto-taraudeuses, dans des canons en matière plastique du support. Afin de garantir la tenue de cet assemblage, il est généralement ajouté des bagues anti-fluage qui sont métalliques. Sur ces bagues, il y a des petites dents qui se plantent dans le support pour augmenter la tenue mécanique.

Le montage des projecteurs comporte les étapes suivantes:
- montage des bagues sur le projecteur ;
- sertissage des bagues pour une tenue provisoire ;
- préparation de vis à rondelles imperdables ;
- mise en référence des projecteurs par rapport à la face avant ; et
- vissage.

L'invention vise notamment à améliorer la situation.

Elle propose à cet effet un dispositif de fixation d'un élément sur un support comportant une vis comprenant un corps et une tête, destinée à traverser une ouverture de l'élément et à pénétrer le support ainsi qu'une rondelle destinée à entourer la vis en étant intercalée entre la tête de la vis et l'élément. La rondelle comporte une périphérie externe et une périphérie interne présentant chacune au moins une partie saillante destinée à pénétrer respectivement l'élément et le support pour assurer la fixation.

Un tel dispositif de fixation est particulièrement intéressant en ce qu'il offre une tenue mécanique excellente grâce à la pénétration respective de l'élément et du support par les parties saillantes. Ce dispositif de fixation reste pour autant extrêmement simple, puisqu'il suffit d'intercaler la rondelle entre la tête de la vis et l'élément comme pour une vis traditionnelle.

Dans un mode de réalisation, la périphérie interne et la périphérie externe de la rondelle comportent chacune des parties formant des dents pour pénétrer respectivement l'élément et le support.

Dans une première variante, les dents peuvent être formées par des parties découpées et redressées de la rondelle. Dans une autre variante, ces dents peuvent être formées par les parties embouties de la rondelle. Dans encore une autre forme variante, la périphérie interne de la rondelle comporte un collet formant la partie saillante.

Ces variantes permettent de réaliser des dispositifs de fixation variée, offrant des technologies différentes et efficaces.

L'invention concerne également un procédé de fixation d'un élément sur un support, comportant la fourniture d'un dispositif tel que ci-dessus, et comportant en outre le placement de l'élément par rapport au support, le montage de la rondelle sur la vis, le montage de cet ensemble à travers une ouverture de l'élément et dans le support et le vissage de la vis jusqu'à ce qu'un degré de fixation suffisant soit atteint.

L'invention concerne aussi une face avant comportant un dispositif de fixation tel que décrit auparavant.

D'autres caractéristiques et avantages de l'invention apparaîtront mieux à la lecture de la description qui suit, à titre illustratif et non limitatif d'exemples issus des figures sur les dessins annexés dans lesquels :
- la figure 1 représente une vue en coupe schématique d'un dispositif de fixation selon l'invention ;
- la figure 2 représente une variante du dispositif de ia figure 1 ; et
- la figure 3 est un agrandissement d'une partie de la figure 2.

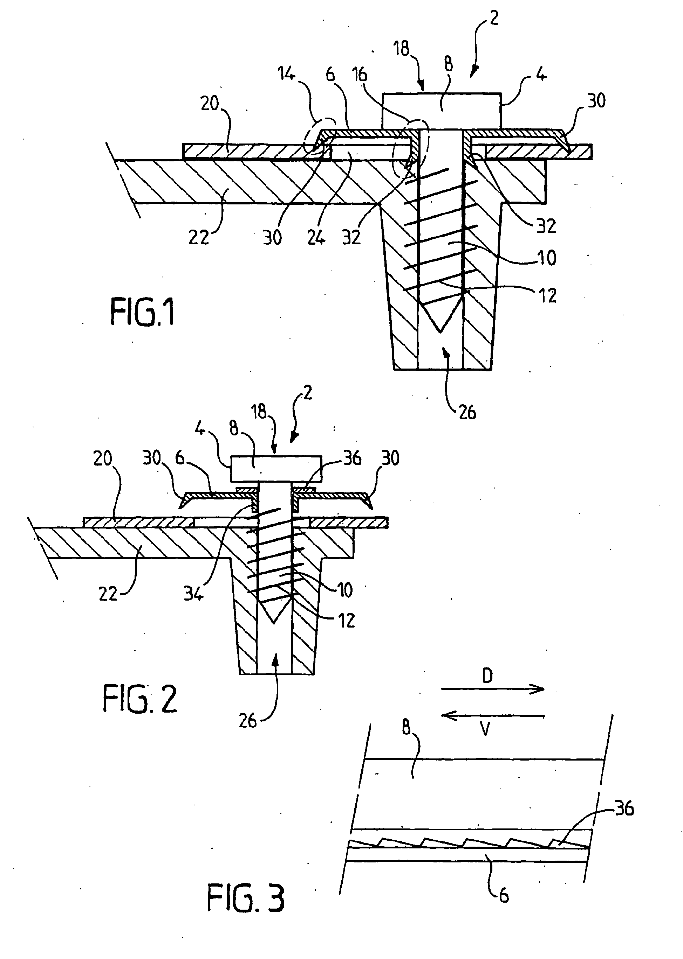

Comme on peut le voir sur la figure 1, un dispositif 2 selon l'invention comporte une vis 4 et une rondelle 6. La vis 4 comporte une tête 8 et un corps 10 muni d'un filetage 12. La rondelle 6 est de forme sensiblement annulaire et comporte une périphérie externe 14 et une périphérie interne 16. Le dispositif de fixation 2 est formé par l'assemblage de la vis 4 et la rondelle 6, le corps 10 pénétrant une ouverture 18 de la rondelle 6.

Afin de fixer un élément 20 sur un support 22, on dispose l'élément 20 sur le support 22 de telle sorte qu'une ouverture de fixation 24 de l'élément 20 est sensiblement en regard d'une ouverture de réception 26 du support 22. Dans l'exemple ici décrit, l'ouverture 24 est sensiblement plus importante que l'ouverture 26. Dans la pratique, ces deux ouvertures peuvent être de taille sensiblement égale.

Afin de fixer l'élément 20 sur le support 22, le dispositif 2 vient traverser l'ouverture de fixation 24 et pénétrer l'ouverture de réception 26. Afin d'assurer la tenue mécanique de cet assemblage, la vis 8 est vissée dans l'ouverture 26, et le taraudage assure un maintien.

Les périphéries externe 14 et interne 16 de la rondelle 6 comportent chacune une paire de dents respectives 30 et 32 qui vont venir compléter le maintien assuré par le taraudage 12. En effet, la rondelle 6 est prévue de telle sorte qu'elle recouvre l'ouverture 24, quelle que soit la position relative de cette ouverture 24 avec l'ouverture 26. Ainsi, la tête 8 de la vis 4 qui vient en appui sur la rondelle 6 plaque l'élément 20 sur le support 22.

En outre, les dents 30 et 32 de la rondelle 6 sont orientées respectivement vers l'élément 20 et le support 22, c'est-à-dire dans la direction longitudinale de la vis 4, dans le sens opposé à la tête 8 de la vis 4. Ainsi, les dents 30 et 32 pénètrent l'élément 20 et le support 22 lorsque l'on visse la vis 4. L'élément 20 est donc alors maintenu fixé au support 22 d'une part par la pression de la vis 4 sur la rondelle 6 et, d'autre part, par la pénétration des dents 30 et 32 respectivement dans l'élément 20 et le support 22.

En outre, afin de simplifier le montage du dispositif, la rondelle est prévue pour présenter un diamètre interne qui est légèrement inférieur à celui du corps 10 de la vis 4. Elle forme ainsi une rondelle dite imperdable, ce qui facilite le montage. Pratiquement, dans un premier temps, on monte la rondelle 6 sur le corps 10 et celle-ci reste en place spontanément grâce à cette caractéristique.

La fixation de l'élément 20 sur le support 22 consiste donc alors à monter la rondelle 6 sur la vis 4, à monter cet ensemble à travers une ouverture 24 de l'élément et dans le support et le vissage de la vis 4 jusqu'à ce qu'un degré de fixation suffisant soit atteint.

Les dents 30 et 32 peuvent être formées par découpage d'une portion de la périphérie externe 14 respectivement interne 16 de la rondelle 6 puis redressage de ces portions découpées. Ces dents peuvent également être formées par emboutissage local de la périphérie externe 14 ou interne 16 de la rondelle 6.

La figure 2 montre une variante de la figure 1 dans laquelle les dents 32 sont remplacées par un collet 34 formé dans la région de la périphérie interne 16 de la rondelle 6. Ce collet 34 peut notamment être réalisé par un emboutissage ou un poinçonnage de la rondelle. Il est prévu que ce collet ait une épaisseur moindre que la rondelle. Lors du montage du dispositif 2 pour assurer la fixation, le collet 34 joue un rôle similaire à celui des dents 32.

Sur cette figure, la rondelle 6 comporte en outre un jeu de stries 36 montées entre la face supérieure de la rondelle et la tête 8 de la vis 4. Ces stries 36 sont détaillées sur la figure 3.

Comme on peut le voir sur la figure 3, les stries 36 sont telles qu'une rotation de la tête 8 dans le sens de la flèche V n'est pas gênée, alors qu'une rotation de la tête 8 dans le sens de la flèche D, une fois la vis 4 vissée est entravée. Ainsi, une fois la vis montée et serrée, les dents 36 rendent le desserrage particulièrement difficile. Les stries 36 permettent donc d'offrir une amélioration de la tenue mécanique du dispositif 2, en empêchant le dévissage de la vis 4. Dans un mode de réalisation particulier, les stries 36 pourront être remplacées par une rondelle autobloquante.

Dans ces deux modes de réalisations la hauteur respective des dents 30 et 32 ainsi que celle du collet 34 peut être modifiée en fonction de l'élément 20 et du support 22. En effet, selon la profondeur de l'ouverture 24 et la dureté respective de l'élément 20 et du support 22, la variation de la hauteur respective des dents 30 et 32 (ou du collet 34) permet de choisir laquelle des paires de dents pénétrera en premier et la profondeur de cette pénétration. En dimensionnant ces hauteurs, il est donc possible de s'assurer que les dents pénètrent sensiblement en même temps, ce qui assure une fixation plus précise. D'autre part, la maîtrise de ces dimensions. permet également de limiter tout fluage dû à la pénétration des dents 30 et 32 et du collet 34 dans l'élément 20 et le support 22.

La description des exemples ci-dessus est donnée à titre illustratif et non limitatif et l'homme du métier saura envisager toute variante possible, notamment à la lecture des revendications qui suivent en annexe.

## Revendications

1. Dispositif de fixation d'un élément (20) sur un support (22) comportant une vis (4) comprenant un corps (10) et une tête (8), destinée à traverser une ouverture (24) de l'élément (20) et à pénétrer le support (22) ainsi qu'une rondelle (6) destinée à entourer la vis (4) en étant intercalée entre la tête (8) de la vis et l'élément (20), la rondelle (6) comportant une périphérie externe (14) et une périphérie interne (16) présentant chacune au moins une partie saillante (30, 32 ; 30, 34), la périphérie externe étant, destinée à pénétrer l'élément (20) **caractérisé en ce que** la périphérie interne est destinée à pénétrer le support (22) pour assurer la fixation.

2. Dispositif selon la revendication 1, **caractérisé en ce que** la rondelle (6) a un diamètre interne sensiblement inférieur au diamètre de la vis (4), de manière à assurer une liaison imperdable entre la vis (4) et la rondelle (6).

3. Dispositif selon l'une des revendications précédentes, **caractérisé en ce que** la périphérie externe (14) de la rondelle (6) comporte localement des parties découpées et redressées formant des dents (30) pour pénétrer l'élément (20).

4. Dispositif selon l'une des revendications 1 et 2, **caractérisé en ce que** la périphérie externe (14) de la rondelle (6) comporte localement des parties embouties formant des dents (30) pour pénétrer l'élément (20).

5. Dispositif selon l'une des revendications précédentes, **caractérisé en ce que** la périphérie interne (16) de la rondelle (6) comporte localement des parties découpées et redressées formant des dents (32) pour pénétrer le support (22).

6. Dispositif selon l'une des revendications 1 à 4, **caractérisé en ce que** la périphérie interne (16) de la rondelle (6) comporte localement des parties embouties formant des dents (32) pour pénétrer le support (22).

7. Dispositif selon l'une des revendications 1 à 4, **caractérisé en ce que** la périphérie interne (16) de la rondelle (6) comporte un collet (34) sensiblement moins épais que la rondelle (6), entourant le corps (10) de la vis (4) et destiné à pénétrer le support (22).

8. Dispositif selon l'une des revendications précédentes, **caractérisé en ce que** la périphérie interne (16) de la rondelle (6) comporte des stries (36) faisant face à la tête (8) de la vis (4), pour empêcher une rotation de celle-ci permettant le dévissage.

9. Dispositif selon l'une des revendications précédentes, **caractérisé en ce que** les parties saillantes (30, 32 ; 30, 34) de la périphérie interne (16) et de la périphérie externe (14) de la rondelle (6) ont des hauteurs respectives choisies afin de pénétrer de manière sensiblement simultanée respectivement l'élément (20) et le support (22).

10. Dispositif selon l'une des revendications précédentes, **caractérisé en ce que** les parties saillantes (30, 32 ; 30, 34) de la périphérie interne (16) et de la périphérie externe (14) de la rondelle (6) ont des hauteurs respectives choisies afin de limiter tout fluage dû à leur pénétration dans l'élément (20) et le support (22).

11. Procédé de fixation d'un élément (20) sur un support (22) comportant la fourniture d'un dispositif (2) selon l'une des revendications précédentes, et comportant en outre le placement de l'élément (20) par rapport au support (22), le montage de la rondelle (6) sur la vis (4), le montage de cet ensemble à travers une ouverture (24) de l'élément (20) et dans le support (22) et le vissage de la vis (4) jusqu'à ce qu'un degré de fixation suffisant soit atteint.

12. Face avant comportant un dispositif de fixation d'un élément (20) sur un support (22) selon l'une des revendications 1 à 10.

## Claims

1. Device for attaching an element (20) to a holder (22) comprising a screw (4) including a body (10) and a head (8), intended to pass through an opening (24) of the element (20) and to penetrate the holder (22), and a washer (6) intended to surround the screw (4) while being inserted between the head (8) of the screw and the element (20), the washer (6) comprising an external periphery (14) and an internal periphery (16) each having at least one protruding portion (30, 32; 30, 34), the external periphery being intended to penetrate the element (20), **characterized in that** the internal periphery is intended to penetrate the holder (22) to provide the attachment.

2. Device according to Claim 1, **characterized in that** the washer (6) has an internal diameter substantially less than the diameter of the screw (4), so as to provide a captive connection between the screw (4) and the washer (6).

3. Device according to either of the preceding claims, **characterized in that** the external periphery (14) of the washer (6) comprises locally cut out and reshaped portions forming teeth (30) to penetrate the element (20).

4. Device according to either of Claims 1 and 2, **characterized in that** the external periphery (14) of the washer (6) comprises locally stamped portions forming teeth (30) to penetrate the element (20).

5. Device according to one of the preceding claims, **characterized in that** the internal periphery (16) of the washer (6) comprises locally cut out and reshaped portions forming teeth (32) to penetrate the holder (22).

6. Device according to one of Claims 1 to 4, **characterized in that** the internal periphery (16) of the washer (6) comprises locally stamped portions forming teeth (32) to penetrate the holder (22).

7. Device according to one of Claims 1 to 4, **characterized in that** the internal periphery (16) of the washer (6) comprises a collar (34) substantially thinner than the washer (6), surrounding the body (10) of the screw (4) and intended to penetrate the holder (22).

8. Device according to one of the preceding claims, **characterized in that** the internal periphery (16) of the washer (6) comprises ridges (36) facing the head (8) of the screw (4), to prevent a rotation of the latter allowing unscrewing.

9. Device according to one of the preceding claims, **characterized in that** the protruding portions (30, 32; 30, 34) of the internal periphery (16) and of the external periphery (14) of the washer (6) have respective heights chosen in order to penetrate substantially simultaneously the element (20) and the holder (22) respectively.

10. Device according to one of the preceding claims, **characterized in that** the protruding portions (30, 32; 30, 34) of the internal periphery (16) and of the external periphery (14) of the washer (6) have respective heights chosen in order to limit any creep due to their penetration in the element (20) and the holder (22).

11. Method of attaching an element (20) to a holder (22) comprising the supply of a device (2) according to one of the preceding claims, and also comprising the placement of the element (20) relative to the holder (22), the mounting of the washer (6) onto the screw (4), the mounting of this assembly through an opening (24) of the element (20) and into the holder (22) and the tightening of the screw (4) until a sufficient degree of attachment is achieved.

12. Front face comprising a device for attaching an element (20) to a holder (22) according to one of Claims 1 to 10.

## Patentansprüche

1. Vorrichtung zur Befestigung eines Elements (20) auf einem Träger (22), die eine Schraube (4) mit einem Körper (10) und einem Kopf (8), die dazu bestimmt ist, eine Öffnung (24) des Elements (20) zu durchqueren und in den Träger (22) einzudringen, sowie eine Unterlegscheibe (6) aufweist, die dazu bestimmt ist, die Schraube (4) zu umgeben, indem sie zwischen dem Kopf (8) der Schraube und dem Element (20) eingefügt wird, wobei die Unterlegscheibe (6) einen Außenumfang (14) und einen Innenumfang (16) aufweist, die je mindestens einen vorstehenden Teil (30, 32; 30, 34) haben, wobei der Außenumfang dazu bestimmt ist, in das Element (20) einzudringen, **dadurch gekennzeichnet, dass** der Innenumfang dazu bestimmt ist, in den Träger (22) einzudringen, um die Befestigung zu gewährleisten.

2. Vorrichtung nach Anspruch 1, **dadurch gekennzeichnet, dass** die Unterlegscheibe (6) einen Innendurchmesser hat, der deutlich kleiner ist als der Durchmesser der Schraube (4), um eine unverlierbare Verbindung zwischen der Schraube (4) und der Unterlegscheibe (6) zu gewährleisten.

3. Vorrichtung nach einem der vorhergehenden Ansprüche, **dadurch gekennzeichnet, dass** der Außenumfang (14) der Unterlegscheibe (6) lokal ausgeschnittene und aufgerichtete Teile aufweist, die Zähne (30) bilden, um in das Element (20) einzudringen.

4. Vorrichtung nach einem der Ansprüche 1 und 2, **dadurch gekennzeichnet, dass** der Außenumfang (14) der Unterlegscheibe (6) lokal tiefgezogene Teile aufweist, die Zähne (30) bilden, um in den Element (20) einzudringen.

5. Vorrichtung nach einem der vorhergehenden Ansprüche, **dadurch gekennzeichnet, dass** der Innenumfang (16) der Unterlegscheibe (6) lokal ausgeschnittene und aufgerichtete Teile aufweist, die Zähne (32) bilden, um in den Träger (22) einzudringen.

6. Vorrichtung nach einem der Ansprüche 1 bis 4, **dadurch gekennzeichnet, dass** der Innenumfang (16) der Unterlegscheibe (6) lokal tiefgezogene Teile aufweist, die Zähne (32) bilden, um in den Träger (22) einzudringen.

7. Vorrichtung nach einem der Ansprüche 1 bis 4, **dadurch gekennzeichnet, dass** der Innenumfang (16) der Unterlegscheibe (6) einen Bund (34) aufweist, der deutlich weniger dick ist als die Unterlegscheibe (6), den Körper (10) der Schraube (4) umgibt und dazu bestimmt ist, in den Träger (22) einzudringen.

8. Vorrichtung nach einem der vorhergehenden Ansprüche, **dadurch gekennzeichnet, dass** der Innenumfang (16) der Unterlegscheibe (6) Riefen (36) aufweist, die dem Kopf (8) der Schraube (4) gegenüberliegen, um deren Drehung zu verhindern, die das Losschrauben ermöglicht.

9. Vorrichtung nach einem der vorhergehenden Ansprüche, **dadurch gekennzeichnet, dass** die vorstehenden Teile (30, 32; 30, 34) des Innenumfangs (16) und des Außenumfangs (14) der Unterlegscheibe (6) Höhen haben, die ausgewählt werden, um im Wesentlichen gleichzeitig in das Element (20) und in den Träger (22) einzudringen.

10. Vorrichtung nach einem der vorhergehenden Ansprüche, **dadurch gekennzeichnet, dass** die vorstehenden Teile (30, 32; 30, 34) des Innenumfangs (16) und des Außenumfangs (14) der Unterlegscheibe (6) Höhen haben, die ausgewählt werden, um jede Kriechverformung aufgrund ihres Eindringens in das Element (20) und den Träger (20) zu begrenzen.

11. Verfahren zur Befestigung eines Elements (20) auf einem Träger (22), das die Bereitstellung einer Vorrichtung (2) nach einem der vorhergehenden Ansprüche aufweist, und außerdem das Anordnen des Elements (20) bezüglich des Trägers (22), die Montage der Unterlegscheibe (6) auf die Schraube (4), die Montage dieser Einheit durch eine Öffnung (24) des Elements (20) hindurch und in den Träger (22) und das Festschrauben der Schraube (4) bis zum Erreichen eines ausreichenden Befestigungsgrads aufweist.

12. Frontseite, die eine Vorrichtung zur Befestigung eines Elements (20) auf einem Träger (22) nach einem der Ansprüche 1 bis 10 aufweist.
